# EUROPÄISCHE PATENTANMELDUNG

(11) **EP 1 517 432 A2**
(43) Veröffentlichungstag der Anmeldung: **23.03.2005**
(21) Anmeldenummer: 04020348.1
(22) Anmeldetag: 27.08.2004
(51) Int. Cl.: H02P 1/18

(54) **Ansteuerschaltung für ein Motoranlasser-Relais**

(30) Priorität: 16.09.2003 DE 10343059
(71) Anmelder: ROBERT BOSCH GMBH, 70442 Stuttgart (DE)
(72) Erfinder: Sommerfeld, Jens, 71299 Wimsheim (DE); Seiler, Gregor, 71691 Freiberg a.N. (DE)

(57) **Zusammenfassung**

Die vorliegende Erfindung stellt eine Ansteuerschaltung (1) für ein Motoranlasser-Relais (2) bereit mit: (a) einer Schalteinrichtung (T) zum Schalten eines Ausgangs (A_{START}) des Motoranlasser-Relais (2) an ein Bezugspotential (M) und zum Aktivieren des Motoranlasser-Relais (2) in Abhängigkeit von einem Ansteuersignal, welches an einem Ansteuereingang (E_{T}) der Schalteinrichtung (T) angelegt ist; (b) einer ersten Logik-Schaltung (N₁) zum logischen Verknüpfen eines ersten digitalen Signals (U_{RES}) einer Rechnereinrichtung (3) und eines zweiten digitalen Signals (U_{START}) einer Bedieneinrichtung (4); (c) einer zweiten Logik-Schaltung (N₂) zum logischen Verknüpfen des Ausgangssignals der ersten Logik-Schaltung (N₁) mit dem ersten digitalen Signal (U_{RES}); und einer Speichereinrichtung (N₃, N₄) zum Zwischenspeichem des Zustands an den Ausgängen der ersten und zweiten Logik-Schaltung (N₁, N₂), wobei ein Ausgang der Speichereinrichtung (N₃, N₄) mit dem Ansteuereingang (E_{T}) der Schalteinrichtung (T) verbunden ist, wobei bei Unterschreitung einer vorbestimmten Versorgungsspannung an einer Rechnereinrichtung (3) mit daraus resultierendem aktivierten Reset-Signal (U_{RESET}) ein aktiviertes Motoranlasser-Relais (2) sichergestellt ist.

## Beschreibung

### STAND DER TECHNIK

Die vorliegende Erfindung betrifft eine Ansteuerschaltung für ein Motoranlasser-Relais und insbesondere eine Starter-Latch-Schaltung zur Aktivierung eines Starter-/Anlasser-Relais über eine Schalteinrichtung.

Die Ansteuerung eines Anlassers bzw. Starters für eine Verbrennungskraftmaschine wie einem Dieseloder Otto-Motor erfolgt heutzutage im allgemeinen über ein Anlasser- bzw. Starter-Relais. Um den hohen Strom von kurzzeitig mehreren Hundert Amperes nicht über einen Halbleiterschalter direkt durchzuschalten, wird ein Relais eingesetzt, welches über einen vergleichsweise kleinen Strom mittels einer Schalteinrichtung, vorzugsweise einem Feldeffekttransistor (FET), aktivierbar ist. Heutige, insbesondere in Kraftfahrzeugen, wie Pkw, zum Einsatz kommende Steuergeräte sind in der Regel für einen Betriebsspannungsbereich zwischen 6 V und 16 V konzipiert. In einem Spannungsbereich unterhalb von 6 V ist die Funktion des Steuergerätes, d.h. die Ansteuerung des Anlasser-Relais, nicht gewährleistet.

Bei bekannten Steuergeräten kann bei einem Startvorgang des Motors aufgrund eines kurzzeitigen Spannungseinbruches der Batteriespannung unter 6 V aufgrund der großen Last beim Anlassen durch den niedrigen Innenwiderstand des Anlassers ein Reset der Fahrzeugelektronik erfolgen, welches unerwünscht auch die Schalteinrichtung zur Aktivierung des Starter-Relais abschaltet. Durch den kurzen Spannungseinbruch, gegebenenfalls im Millisekundenbereich, erfolgt jedoch aufgrund des Elektronik-Resets eine deutlich länger währende Unterbrechung des Starter-Relais-Aktivierungskreises. Daraufhin fällt das Starter-Relais ab und der Startvorgang des Motors wird gegebenenfalls kurz vor dem Anspringen des Motors abgebrochen, obwohl nur ein kurzer Spannungseinbruch das Steuergerät zu einem Reset veranlasst hat.

### VORTEILE DER ERFINDUNG

Die erfindungsgemäße Ansteuerschaltung für ein Motoranlasser-Relais mit den Merkmalen des Anspruchs 1 weist gegenüber dem Stand der Technik den Vorteil auf, im Falle eines Steuergeräte-Resets z.B. auf Grund eines Spannungseinbruchs der Versorgungsspannung den Zustand der Ansteuerschalteinrichtung des Anlasser-Relais beizubehalten, bis das Steuergerät nach dem Reset wieder aktiviert ist.

Durch eine Speicherung des Zustands vor einem Steuergeräte-Reset wird somit ermöglicht, trotz eines Steuergeräte-Resets, beispielsweise aufgrund eines kurzzeitigen Spannungseinbruches beim Anlassen des Motors, den Startvorgang fortzusetzen.

Die der vorliegenden Erfindung zugrunde liegende Idee besteht im wesentlichen darin, die Funktion des Starter- bzw. Anlasserausganges mittels einer Speichereinrichtung zu gewährleisten, um auch bei einer Spannung unterhalb von 6 V, bei welcher beispielsweise eine Rechnereinheit des Steuergerätes bzw. das gesamte Steuergerät deaktiviert, d.h. resetet, wird, eine unterbrechungsfreie Aktivierung des Anlassers sicherzustellen. Um dieses Ziel zu erreichen, wird mit einfachen Mitteln eine Starter- bzw, Anlasser-Latch-Einrichtung bereitgestellt, welche kostengünstig realisierbar ist.

Die der vorliegenden Erfindung zugrunde liegende Problematik wird insbesondere dadurch gelöst, eine Ansteuerschaltung für ein Motoranlasser-Relais bereitzustellen mit: (a) einer Schalteinrichtung zum Schalten eines Ausgangs des Motoranlasser-Relais an ein Bezugspotential und zum Aktivieren des Motoranlasser-Relais in Abhängigkeit von einem Ansteuersignal, welches an einem Ansteuereingang der Schalteinrichtung angelegt ist; (b) einer ersten Logik-Schaltung zum logischen Verknüpfen eines ersten digitalen Signals einer Rechnereinrichtung und eines zweiten digitalen Signals einer Bedieneinrichtung; (c) einer zweiten Logik-Schaltung zum logischen Verknüpfen des Ausgangssignals der ersten Logik-Schaltung mit dem ersten digitalen Signal; und (d) einer Speichereinrichtung zum Zwischenspeichern des Zustands an den Ausgängen der ersten und zweiten Logik-Schaltung, wobei ein Ausgang der Speichereinrichtung mit dem Ansteuereingang der Schalteinrichtung verbunden ist, (e) wobei bei Unterschreitung einer vorbestimmten Versorgungsspannung an einer Rechnereinrichtung mit daraus resultierendem aktivierten Reset-Signal ein aktiviertes Motoranlasser-Relais sichergestellt ist.

In den Unteransprüchen finden sich vorteilhafte Weiterbildungen und Ausgestaltungen der in Anspruch 1 angegebenen Ansteuerschaltung.

Gemäß einer bevorzugten Weiterbildung weist die erste und zweite Logik-Schaltung jeweils ein NAND-Gatter auf. Dies bietet den Vorteil einer einfachen Realisierung der Logik-Schaltung.

Gemäß einer weiteren bevorzugten Weiterbildung weist die Schalteinrichtung einen Transistor. vorzugsweise einen FET, auf. Ein Feldeffekttransistor als Schalteinrichtung birgt den Vorteil einer effizienten, verlustarmen Schalteinrichtung, welche mit einfachen Mitteln ansteuerbar ist.

Gemäß einer weiteren bevorzugten Weiterbildung weist die Speichereinrichtung ein Flip-Flop, vorzugsweise zwei NAND-Gatter, auf. Ein kostengünstiger Zustandsspeicher kann vorteilhaft auf diese Weise realisiert werden.

Gemäß einer weiteren bevorzugten Weiterbildung weist das Flip-Flop ein drittes NAND-Gatter auf, welches eingangsseitig mit dem Ausgang der ersten Logik-Schaltung und dem Ausgang eines vierten NAND-Gatters verbunden ist, wobei das vierte NAND-Gatter eingangsseitig mit dem Ausgang des dritten NAND-Gatters und dem Ausgang der zweiten Logik-Schaltung verbunden ist. Ein einfaches, kostengünstig realisierbares Flip-Flop auf Basis zweier NAND-Gatter wird somit vorteilhaft bereitgestellt.

Gemäß einer weiteren bevorzugten Weiterbildung ist zwischen dem Ausgang des Motoranlasser-Relais und der Schalteinrichtung eine Diode und vorzugsweise zwischen dem Ausgang des Motoranlasser-Relais und dem Bezugspotential ein Kondensator geschaltet. Dies birgt den Vorteil eines Verpolungsschutzes (Diode) und einer ESD-Schutzeinrichtung (Kondensator).

Gemäß einer weiteren bevorzugten Weiterbildung ist zwischen dem Ausgang der ersten Logik-Schaltung und einem Eingang der Speichereinrichtung ein erster Widerstand und dem ersten Widerstand nachgelagert zwischen dem Eingang der Speichereinrichtung und dem Bezugspotential ein Kondensator parallel einem zweiten Widerstand geschaltet. Der zweite Widerstand dient vorteilhaft zur Bereitstellung eines definierten Potentials, wobei der zweite Widerstand und der Kondensator für eine Zeitverzögerung sorgen. Resets, welche kürzer als 22 µs anliegen bzw. auftreten werden somit ignoriert.

Gemäß einer weiteren bevorzugten Weiterbildung ist ein Signalausgang als Diagnose-Schnittstelle für eine Rechnereinrichtung zwischen dem Anlasser-Relais-Ausgang und der Schalteinrichtung vorgesehen. Auf diese Weise kann über eine Diagnose-Schiene die Detektion eines Abfalls des Relais, d.h. der Last in diesem Aktivierungskreis, sowie die Erfassung eines Kurzschlusses zu dem Bezugspotential (Masse) bzw. zu einer Spannungsversorgung (Batterie) sichergestellt werden.

Gemäß einer weiteren bevorzugten Weiterbildung ist die Ansteuerschaltung zur Aktivierung eines Motoranlasser-Relais in einem Pkw vorgesehen.

### ZEICHNUNG

Ein Ausführungsbeispiel der Erfindung ist in der Zeichnung dargestellt und in der nachfolgenden Beschreibung näher erläutert.

Es zeigt:

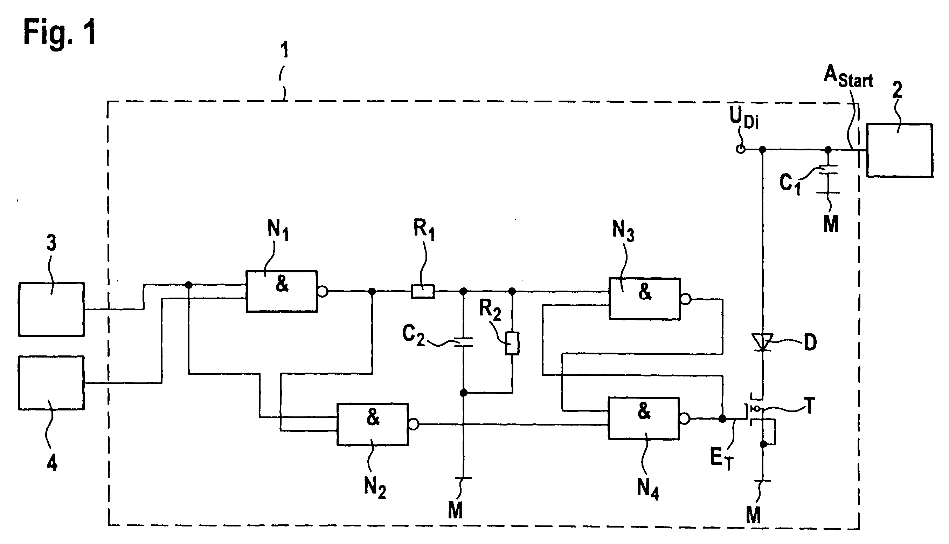

- Fig. 1: ein schematisches Blockschaltbild einer Ansteuerschaltung zur Erläuterung einer Ausführungsform der vorliegenden Erfindung.

### BESCHREIBUNG DES AUSFÜHRUNGSBEISPIELS

In Fig. 1 ist schematisch ein Blockschaltbild einer Ansteuerschaltung gemäß einer Ausführungsform der vorliegenden Erfindung dargestellt. Ein erstes Signal U_{RES} von einer Rechnereinrichtung 3 und ein zweites Signal U_{START} von einer Bedieneinrichtung 4 werden an einer ersten Logik-Schaltung N₁, vorzugsweise einem NAND-Gatter, miteinander verknüpft. Das erste Signal U_{RES} ist ein Reset-Signal, welches von der Rechnereinheit 3 herrührt, welches bei einem Low-Pegel, d.h. beispielsweise bei angelegten Bezugspotential am ersten Eingang der Logik-Schaltung N₁, eine Reset-Funktion des Rechners 3 identifiziert. Das bedeutet, der Rechner 3 läuft beispielsweise nicht oder nicht mehr. Das zweite Signal U_{START} entspricht einem Starter-Bedienung, d.h. beispielsweise bei Drücken eines Starter-Knopfes bzw. Drehen eines Zündschlüssels in Start-Position durch einen Fahrer ist ein Low-Pegel als Signal U_{START} vorgesehen. Der Ausgang der ersten Logik-Schaltung N₁ ist mit einem ersten Eingang einer zweiten Logik- Schaltung N₂, vorzugsweise einem NAND-Gatter, verbunden. Der erste Eingang der ersten Logik- Schaltung N₁, an welchem das Signal U_{RES} anliegt, ist mit dem zweiten Eingang der zweiten Logik- Schaltung N₂ verbunden.

Der Ausgang der ersten Logik-Schaltung N₁ und der Ausgang der zweiten Logik-Schaltung N₂ wird einer Speichereinrichtung N₃, N₄ eingangsseitig zugeführt. Die Speichereinrichtung N₃, N₄ weist vorzugsweise zwei NAND-Gatter auf, wobei der Ausgang des dritten NAND-Gatters N₃ vorzugsweise mit einem Eingang eines vierten NAND-Gatters N₄ der Speichereinrichtung verbunden ist. Der Ausgang des vierten NAND-Gatters N₄ ist vorzugsweise mit einem Eingang des dritten NAND-Gatters N₃ der Speichereinrichtung verbunden. Der Ausgang der ersten Logik-Schaltung N₁ ist vorzugsweise mit einem weiteren Eingang des dritten NAND-Gatters N₃ der Speichereinrichtung N₃, N₄ verbunden. Der Ausgang der zweiten Logik-Schaltung N₂ ist vorzugsweise mit einem weiteren Eingang des vierten NAND-Gatters N₄ der Speichereinrichtung N₃, N₄ verbunden. Vorzugsweise ist zwischen dem Ausgang der ersten Logik-Schaltung N₁ und der Speichereinrichtung, vorzugsweise des dritten NAND-Gatters N₃, ein ohmscher Widerstand R₁, beispielsweise der Größe 10 k Ohm vorgesehen. Zwischen dem ohmschen Widerstand R₁ und dem Eingang der Speichereinrichtung, vorzugsweise des dritten NAND-Gatters N₃, ist vorzugsweise eine Parallelschaltung aus einem Kondensator C₂ und einem ohmschen Widerstand R₂ vorgesehen. Der ohmsche Widerstand hat vorzugsweise einen Widerstandswert von 100 k Ohm und der Kondensator weist vorzugsweise eine Kapazität von 2,2 nF auf. An der vom Eingang der Speichereinrichtung N₃, N₄ abgewandten Seite sind der Widerstand R₂ und der Kondensator C₂ mit einem Bezugspotential M, vorzugsweise Masse, verbunden.

Ein Ausgang der Speichereinrichtung N₃, N₄, vorzugsweise des vierten NAND-Gatters N₄, ist mit dem Ansteuereingang E_{T} einer Schalteinrichtung T, vorzugsweise einem Feldeffekttransistor (FET), verbunden. Die Schalteinrichtung T liegt zwischen dem Bezugspotential M, vorzugsweise Masse, und einem Ausgang A_{START} eines Motoranlasser-Relais-Aktivierungskreises (nicht vollständig dargestellt). Vorzugsweise ist zwischen dem Ausgang A_{START} eines Motoranlasser-Relais 2 und der Schalteinrichtung T eine Diode D vorgesehen, welche nur einen Stromfluss in Richtung zum Bezugspotential M zulässt. Bei Aktivierung der Schalteinrichtung T über ein Potential am Eingang E_{T} der Schalteinrichtung T in Abhängigkeit der Signale U_{RES} und U_{START} wird ein Stromfluss einer Spannungsquelle (nicht dargestellt), welche ein höheres Potential als das Bezugspotential M aufweist, über eine Starter-Relais-Aktivierungswicklung (nicht dargestellt), den Ausgang A_{START} des Motoranlasser-Relais 2 und die Schalteinrichtung T zum Bezugspotential M bereitgestellt. Daraufhin wird das Starter-Relais 2 angezogen und der Anlasser-Stromkreis (nicht dargestellt) zum Starten des Motors geschlossen.

Vorzugsweise ist zwischen dem Ausgang A_{START} des Motoranlasser-Relais 2 und der Schalteinrichtung T eine Diagnose-Schnittstelle U_{DI} vorgesehen, über welche ein Diagnose-Signal, vorzugsweise zur Detektion eines Abfallens des Anlasser-Relais 2, d.h. eine Unterbrechung eines Stromflusses durch die Schalteinrichtung T, oder zur Diagnose eines Kurzschlusses nach Batterie oder nach Masse, an die Rechnereinrichtung 3 weitergegeben werden kann. Ein Kondensator C₁, welcher beispielsweise eine Kapazität von 4,7 nF aufweist, ist vorzugsweise zwischen den Ausgang A_{START} des Motoranlasser-Relais 2 und das Bezugspotential M geschaltet.

Gemäß dem schematischen Blockschaltbild in Fig. 1 wird bei freigegebenem Endstufen-Reset, d.h. ein Low-Pegel, als Potential U_{RES} an einem Reset-Ausgang der Rechnereinrichtung 3, über das Signal U_{START} die Schalteinrichtung T aktiviert, d.h. durchgeschaltet. Über das Potential U_{DI} an der Diagnose-Schnittstelle der Rechnereinrichtung 3 kann vorzugsweise über einen Analog-Port der Ausgang A_{START} des Motoranlasser-Relais 2 diagnostiziert werden. Die zwei Logik-Schaltungen N₁ und N₂ sowie die Speichereinrichtung N₃, N₄ dienen einer Verriegelung im Falle eines Unterspannungs-Resets, wenn die Versorgungsspannung der Rechnereinrichtung 2 z.B. 5,5 V unterschreitet. Auch bei einer Batteriespannung von beispielsweise 4 V bleibt die Schalteinrichtung T aufgrund der Speichereinrichtung N₃, N₄ durchgeschaltet, so dass das Starter-Relais 2 angezogen bleibt. Eine Latch-Einrichtung mit einem Flip-Flop als Zustandsspeicher ist somit vorgesehen.

Im Falle eines Resets, welcher beispielsweise durch eine Störung, wie einen Spannungseinbruch bei schwacher Batterie, auftreten kann, speichert die Ansteuerschaltung mit den zwei Logik-Schaltungen N₁, N₂ und der Speichereinrichtung N₃, N₄ den momentanen Zustand des Signalpegels U_{START}, vorzugsweise in einem Flip-Flop als Speichereinrichtung N₃, N₄ und hält somit den Schalter T in seinem aktuellen Zustand. Die Verriegelung wird erst wieder aufgehoben, sobald die Rechnereinrichtung 2 die Kontrolle wieder übernommen, seine Initialisierung beendet und den Endstufen-Reset in Form eines Low-Pegels als Signal U_{RES} wieder freigegeben hat. Bezüglich der Steuerungs-Software ist dabei zu beachten, dass das Signal U_{START} richtig gesetzt worden ist, bevor die Rechnereinrichtung 3 das Ende der Initialisierung der Rechnereinrichtung 3 signalisiert hat. Dadurch wird die Ansteuerung eines Anlasser-Relais 2 auch bei Spannungen unter 6 V Batteriespannung sichergestellt, wobei unterhalb von etwa 1 V die Schalteinrichtung T unterbrochen wird, und somit der Aktivierungskreis des Anlasser-Relais 2 sicher stromfrei und spannungsfrei wird.

Obwohl die vorliegende Erfindung vorstehend anhand eines bevorzugten Ausführungsbeispiels beschrieben wurde, ist sie darauf nicht beschränkt, sondern auf vielfältige Weise modifizierbar. So ist neben der exemplarisch vorgestellten Realisierung mit NAND-Gattern sowohl eine andere Speichereinrichtung realisierbar, als auch ein Gesamtkonzept, welches das gleiche Resultat auch mit anderen Logikbausteinen, beispielsweise mittels inverser Logik, ermöglicht. Darüber hinaus sind alle genannten Dimensionierungen, Bauteile bzw. Spannungsbereiche beispielhaft zu sehen.

### BEZUGSZEICHENLISTE

| | |
|---|---|
| 1 | Ansteuerschaltung |
| 2 | Motoranlasser-Relais |
| 3 | Rechnereinrichtung |
| 4 | Bedieneinrichtung, vorzugsweise manuell vom Fahrer bedienbar |
| | |
| T | Schalteinrichtung, vorzugsweise FET |
| D | Diode |
| N₁-N₄ | NAND-Gatter |
| M | Bezugspotential, vorzugsweise (Fahrzeug-) Masse |
| C₁, C₂ | Kondensator |
| U_{DI} | Potential für Diagnose-Eingang einer Rechnereinrichtung |
| U_{RES} | Signal an Reset-Ausgang einer Rechnereinrichtung |
| U_{START} | Signal am Bedieneinrichtungs-Ausgang |
| R₁,R₂ | Widerstand |
| A_{START} | Ausgang zum Motoranlasser-Relais |
| E_{T} | Ansteuereingang der Schalteinrichtung |

## Patentansprüche

1. Ansteuerschaltung (1) für ein Motoranlasser-Relais (2) mit:
(a) einer Schalteinrichtung (T) zum Schalten eines Ausgangs (A_{START}) des Motoranlasser-Relais (2) an ein Bezugspotential (M) und zum Aktivieren des Motoranlasser-Relais (2) in Abhängigkeit von einem Ansteuersignal, welches an einem Ansteuereingang (E_{T}) der Schalteinrichtung (T) angelegt ist;
(b) einer ersten Logik-Schaltung (N₁) zum logischen Verknüpfen eines ersten digitalen Signals (U_{RES}) einer Rechnereinrichtung (3) und eines zweiten digitalen Signals (U_{START}) einer Bedieneinrichtung (4);
(c) einer zweiten Logik-Schaltung (N₂) zum logischen Verknüpfen des Ausgangssignals der ersten Logik-Schaltung (N₁) mit dem ersten digitalen Signal (U_{RES}); und
(d) einer Speichereinrichtung (N₃, N₄) zum Zwischenspeichern des Zustands an den Ausgängen der ersten und zweiten Logik-Schaltung (N₁, N₂), wobei ein Ausgang der Speichereinrichtung (N₃, N₄) mit dem Ansteuereingang (E_{T}) der Schalteinrichtung (T) verbunden ist,
(e) wobei bei Unterschreitung einer vorbestimmten Versorgungsspannung an einer Rechnereinrichtung (3) mit daraus resultierendem aktivierten Reset-Signal (U_{RESET}) ein aktiviertes Motoranlasser-Relais (2) sichergestellt ist.

2. Ansteuerschaltung nach Anspruch 1,
**dadurch gekennzeichnet,**
**dass** die erste und zweite Logik-Schattung (N₁, N₂) jeweils ein NAND-Gatter aufweist.

3. Ansteuerschaltung nach Anspruch loder 2,
**dadurch gekennzeichnet,**
**dass** die Schalteinrichtung (T) einen Transistor, vorzugsweise einen FET, aufweist.

4. Ansteuerschaltung nach Anspruch 1, 2 oder 3,
**dadurch gekennzeichnet,**
**dass** die Speichereinrichtung (N₃, N₄) ein Flip-Flop, vorzugsweise zwei NAND-Gatter, aufweist.

5. Ansteuerschaltung nach Anspruch 4,
**dadurch gekennzeichnet,**
**dass** das Flip-Flop ein drittes NAND-Gatter (N₃) aufweist, welches eingangsseitig mit dem Ausgangssignal der ersten Logik-Schaltung (N₁) und dem Ausgangssignal eines vierten NAND-Gatters (N₄) verbunden ist, wobei das vierte NAND-Gatter (N₄) eingangsseitig mit dem Ausgangssignal des dritten NAND-Gatters (N₃) und dem Ausgangssignal der zweiten Logik-Schaltung (N₂) verbunden ist.

6. Ansteuerschaltung nach einem der vorangehenden Ansprüche,
**dadurch gekennzeichnet,**
**dass** zwischen dem Ausgang (A_{START}) des Motoranlasser-Relais (2) und der Schalteinrichtung (T) eine Diode (D) und vorzugsweise zwischen dem Ausgang (A_{START}) des Motoranlasser-Relais und dem Bezugspotential (M) ein Kondensator (C₁) geschaltet ist.

7. Ansteuerschaltung nach einem der vorangehenden Ansprüche,
**dadurch gekennzeichnet,**
**dass** zwischen dem Ausgang der ersten Logik-Schaltung (N₁) und einem Eingang der Speichereinrichtung ein erster Widerstand (R₁) und dem ersten Widerstand (R₁) nachgelagert zwischen dem Eingang der Speichereinrichtung und dem Bezugspotential (M) ein Kondensator (R₂) parallel einem zweiten Widerstand (R₂) geschaltet ist.

8. Ansteuerschaltung nach einem der vorangehenden Ansprüche,
**dadurch gekennzeichnet,**
**dass** ein Signalausgang (U_{DI}) als Diagnose-Schnittstelle für eine Recheneinrichtung (3) zwischen dem Ausgang (A_{START}) des Motoranlasser-Relais (2) und der Schalteinrichtung (T) vorgesehen ist.

9. Ansteuerschaltung nach einem der vorangehenden Ansprüche,
**dadurch gekennzeichnet,**
**dass** die Ansteuerschaltung (1) zur Aktivierung eines Motoranlasser-Relais (2) in einem Pkw vorgesehen ist.
